# EUROPEAN PATENT APPLICATION

(11) **EP 0 790 551 A1**
(43) Date of publication of application: **20.08.1997**
(21) Application number: 96200402.4
(22) Date of filing: 16.02.1996
(51) Int. Cl.: G06F 7/10

(54) **Method of modifying the instruction set of a smart card**

(71) Applicant: Koninklijke PTT Nederland N.V., 2509 CH Den Haag (NL)
(72) Inventor: Feiken, Albertus, c/o KPN Research, 2264 XZ Leidschendam (NL)
(74) Representative: Beitsma, Gerhard Romano

(57) **Abstract**

The invention provides a method of modifying and/or extending the instruction set (100) of a smart card (1). Use is made of the attribute tables (121, 122) associated with the commands of the existing instruction set to modify the functions of the instructions. Thus, non-standard functions may be implemented without the need to use additional, i.e. non-standard instructions.

## Description

### BACKGROUND OF THE INVENTION

The present invention relates to a method of modifying the instruction set of a smart card. More particularly, the present invention relates to a method of modifying individual instructions of a smart card.

A smart card, also called IC card, is an electronic device for effecting payments. The integrated circuit of the card contains a microprocessor or the like for processing data. The processor of a smart card is normally provided with an instruction set comprising instructions (commands) such as READ, WRITE, UPDATE, etc., for operating upon the (payment) data contained in the card. Often standardized instruction sets are used, such as defined by the ETSI TE-9 standard. However, such an instruction set is necessarily limited with respect to the number and the scope of the instructions. As electronic payment systems involving smart cards develop, the need often arises to add new functions to the card, or to alter existing functions. Such changes usually imply a modification of the instruction set of the smart card. This would normally involve a redesign of the integrated circuit of the card, which is not only expensive but renders existing cards obsolete. Furthermore, altering a standardized instruction set would jeopardize its compatibility with the standard.

For these and other reasons, the need arises to be able to modify the instruction set of smart cards without substantially deviating from the existing set.

### SUMMARY OF THE INVENTION

It is thus an object of the invention to overcome the above-mentioned and other disadvantages of the prior art and to provide a method which makes it possible to modify an instruction set of a smart card without adding commands. It is a further object of the invention to add new functions to a smart card, the new functions being based on the original instruction set.

In order to achieve these and other objectives, the invention provides a method of modifying the instruction set of a smart card processor, a group of attributes being associated with each instruction of the set, the method comprising the step of inserting a new attribute in the group of attributes of each instruction to be modified, said new attribute specifying an operation.

That is, according to the present invention instructions are modified by modifying their attributes. An attribute typically specifies an access condition or a specific key to be used by the instruction concerned. However, the attribute may contain machine code (or a pointer to machine code) specifying a further operation, the operation performing a specific function (such as a cryptographic procedure). By inserting a new operation, or a modified operation, in an attribute, the function of an instruction may be modified without altering the instruction proper.

The method according to the invention may be applied in situations where the groups of attributes of the instruction set comprise a first table containting first attributes and a second table containing second attributes, the first table containing references to the second table and wherein a new attribute is inserted in the second table. Such a first table may e.g. comprise said specific key, while the second table contains procedures (operations) to be used in conjunction with the instruction concerned. It should be noted that the first table may be referred to by a base table containing references. By inserting a new attribute in the second table, the modification is achieved with a minimal change in the attributes.

Modern smart cards may have at least two different data files, e.g. for different applications of the smart card. In such a case, a group of attributes may comprise subgroups associated with the respective data files. The invention allows a new attribute to be inserted in a limited number of subgroups, thus making instruction modifications specific for individual data files. This way, a great flexibility of instructions may be achieved.

### BRIEF DESCRIPTION OF THE DRAWINGS

Fig. 1 shows, in perspective, a smart card as used for payment and identification purposes.

Fig. 2 schematically shows the integrated circuit of the smart card of Fig. 1.

Fig. 3 schematically shows the instruction set, with its associated attributes, of the smart card of Fig. 2.

Fig. 4 schematically shows further attributes referred to by the attributes of Fig. 3.

### EXEMPLARY EMBODIMENTS

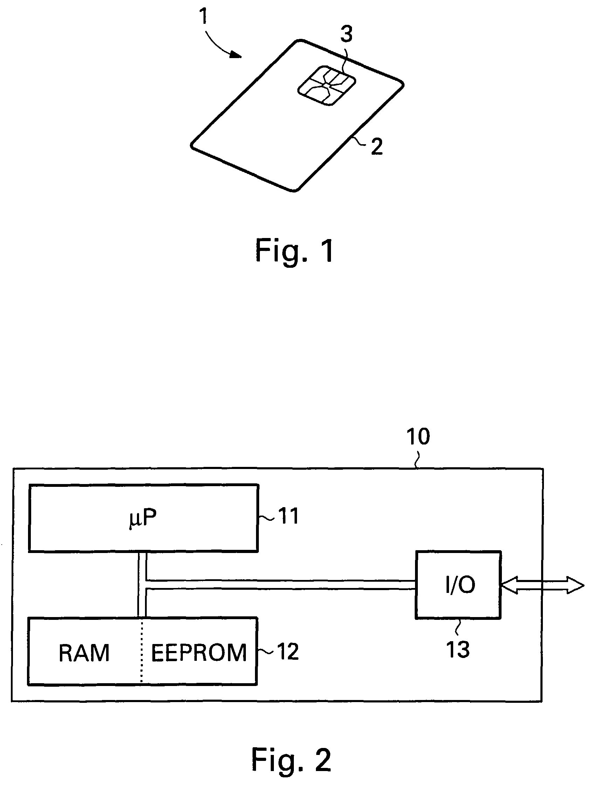

The smart card or IC card 1 shown schematically and by way of example in Fig. 1 comprises a substrate 2, in which an integrated circuit is embedded. The integrated circuit is provided with contacts 3 for contacting a card reader or the like. It should be noted that the present invention can also be applied in the case of so-called contactless smart cards.

The integrated circuit 10 shown schematically and by way of example in Fig. 2 comprises a processor 11, a memory 12 and an input/output circuit 13. The memory may comprise a volatile (RAM) memory part for temporarily storing data and a non-volatile (ROM) memory part for permanently or semi-permanently storing data. The latter part is preferably an EEPROM type memory. The data stored in the non-volatile part may contain both programming data (instructions, programs) and payment data, i.e. data relating to monetary transactions. It will be understood that a separate memory (not shown) may be provided to store the instruction set of the processor 11.

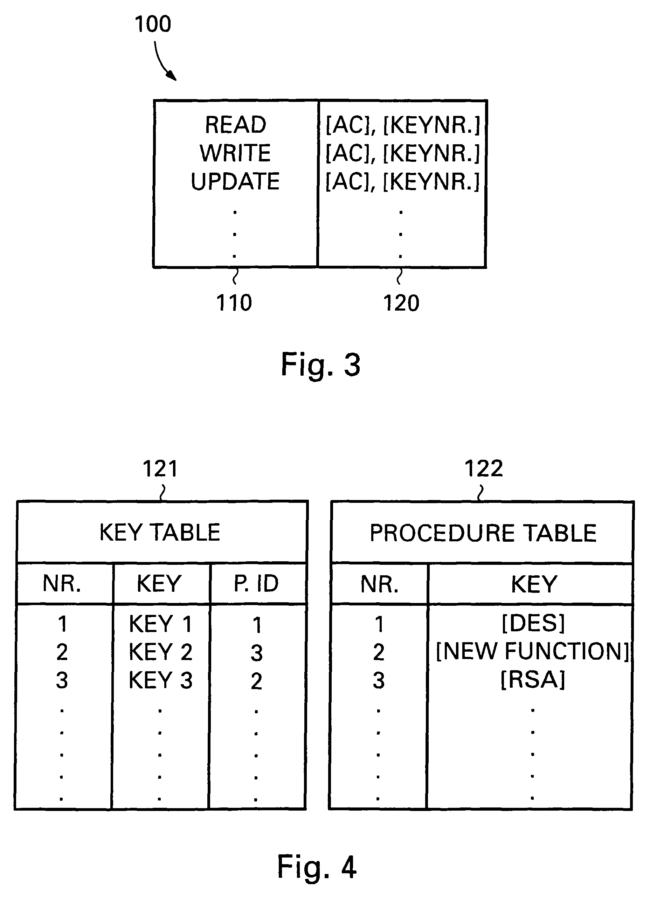

The processor 11 may be a microprocessor having a standardized instruction set, for example in accordance with the ETSI TE-9 standard. IT will be understood that other standards, or non-standards instruction sets, may also be used. The instruction set will be further explained with reference to Fig. 3.

The input/output circuit 13 handles the communication between the processor 11 and external devices (not shown) such as card readers. The input-output-circuit 13, which may contain suitable buffers, is connected with the processor 11 via a data bus. The processor 11 and the memory 12 may be connected by means of the same data bus.

The instruction set shown schematically and by way of example in Fig. 3 and denoted in general by the reference numeral 100 comprises a first part 110 and a second part 120. The first part 110 contains the instructions proper, i.e the instruction code, and constitutes an instruction table. It will be understood that the instruction code comprises the machine code executed by the processor. The instructions are symbolically rendered by their function names as READ, WRITE, etc.

The second part 120 of the instruction set 100 contains entries containing attributes of the corresponding instructions of the first part 110. Each entry thus constitutes a group of attributes associated with an instruction. The attributes may for example comprise access conditions and key numbers, denoted in Fig. 3 by AC and KEYNR, respectively. Access conditions may comprise ALWAYS, NEVER, PROTECTED, and the like. Key numbers may refer to entries in the Key Table depicted in Fig. 4. The second part 120 of the instruction set 100 constitutes a base table of attributes, which refers to further tables (depicted in Fig. 4).

Although the first part (instruction table) 110 and the second part (attributes table) 120 of the instruction set 100 are shown in Fig. 3 for the sake of clarity as adjacent tables, in actual embodiments the tables 110 and 120 may very well be stored at different locations of the smart card's memory 12. In fact, a plurality of second parts (attributes tables) 120 may be present, each second part 120 being associated with a data file. Such a data file may contain data with respect to a specific application (function) of the smart card. Typical applications are "purse", "loyalty program", and "access", for making or receiving payments, collecting loyalty credits, and gaining access to buildings and the like, respectively. Even within such an application more than one data file may be used, and thus more than one associated group of attributes may exist. As a result of the attributes being specific to a data file, the function of an instruction may, at least for the parts defined by attributes, be specific to a data file. This will further be explained with reference to Fig. 4.

The actual access conditions, shown symbolically in Fig. 3 by AC, may be contained in the base attributes table 120, or may be contained in a separate table (not shown). Similarly, the keys (KEY 1, KEY 2, ...) shown in Fig. 4 may be contained in the attributes table 100. For the sake of the explanation of the invention, it will be assumed that the entries KEYNR, which may simply numbers (1, 2, ...), refer to the Key Table 121 of Fig. 4.

Each entry in the Key Table 121 of Fig. 4 contains a key number (NR.), a key (KEY 1, KEY 2, ...) and a procedure identification (denoted P.ID in Fig. 4). Each procedure identification refers in turn to an entry in the Procedure Table 122. Each entry in the Procedure table contains a procedure number and a procedure (operation), denoted in Fig. 4 by e.g. DES or RSA. (The Procedure list of table 122 in Fig. 4 erroneously has the heading "Key", this should read "Procedure"). Such a procedure may be a cryptographic procedure, such as DES and RSA, or some other operation on data.

In accordance with the present invention, the instructions of a smart card may be modified by modifying their attributes. Thus by modifying an entry in the Procedure Table 122, a new function or a modification of an existing function may be achieved. In Fig. 4, a new function (e.g. multiply data with a common factor, or substract one from data) is entered at the second entry of the Procedure Table. Thus if in the Key Table 121 Key nr. 3 is selected, the Procedure ID refers to procedure nr. 2, being the new function. Each time an instruction is executed which involves the use of KEY 3, the new function will be invoked.

It will be understood that references to a new function can be made in various ways, e.g. directly from the table 120 of Fig. 3. Also, the Key Table 121 may contain "dummy" keys so as to allow the use of the table without actually using a key.

Instead of inserting the new function in the Procedure Table 122, a pointer may be inserted which points to a memory location where the new or modified code is stored.

In case a base attribute table (120 in Fig. 3) is associated with a data file, different attribute tables may exist for different data files. The method according to the invention allows for a flexible instruction set by modifying attributes for individual data files.

Smart cards may comprise a hierarchical directory structure for organizing their data files, each group of attributes being associated with at least one data file. In such a case a group of attributes may be applicable to all data files lower in the hierarchy relative to the data file the group is assiciated with. That is, if an instruction is changed by modifying an attribute (of a group of attributes) associated with a certain data file, the modification holds for all data files hierarchically lower relative to said data file. This allows an instruction to be altered for e.g. a specific card application.

As is explained above, the modification of instructions is achieved in accordance with the present invention by replacing and/or modifying attributes. The method of the invention thus enables the use of standard instructions (standard card functions) to effect non-standard operations. The invention also provides a modified instruction set of a smart card, as well as a smart card provided with a modified instruction set.

It will be understood by those skilled in the art that the embodiments described above are given by way of example only and that many modifications and additions are possible without departing from the scope of the present invention.

## Claims

1. Method of modifying the instruction set (100) of a smart card processor (11), a group of attributes (e.g. AC, KEYNR, KEY 1) being associated with each instruction of the set, the method comprising the step of inserting a new attribute in the group of attributes of each instruction to be modified, said new attribute specifying an operation.

2. Method according to claim 1, wherein the groups of attributes of the instruction set comprise a first table (121) containting first attributes and a second table (122) containing second attributes, the first table containing references to the second table, and wherein a new attribute (NEW FUNCTION) is inserted in the second table (122).

3. Method according to claim 1 or 2, wherein the insertion of an attribute involves the replacement of an attribute.

4. Method according to any of the preceding claims, wherein the smart card (1) has at least two data files, a group of attributes comprising subgroups associated with the respective data files, a new attribute being inserted in a limited number of subgroups.

5. Method according to claim 4, wherein the smart card comprises a hierarchical directory structure for organizing its data files, each group of attributes being associated with at least one data file, said group of attributes being applicable to all data files lower in the hierarchy relative to the data file the group is assiciated with.

6. Instruction set of a smart card, modified by the method according to any of the preceding claims.

7. Smart card (1), comprising an instruction set modified by the method according to any of the claims 1 through 5.
